# EUROPÄISCHE PATENTSCHRIFT

(11) **EP 3 174 772 B1**
(45) Veröffentlichungstag und Bekanntmachung des Hinweises auf die Patenterteilung: **21.12.2022**
(21) Anmeldenummer: 15747980.9
(22) Anmeldetag: 28.07.2015
(51) Int. Cl.: B60W 30/095, B60W 40/10, B60W 50/00, B60Q 1/52

(54) **VORRICHTUNG ZUM ANORDNEN AN EINEM KRAFTFAHRZEUG**
DEVICE TO BE ARRANGED ON A MOTOR VEHICLE
DISPOSITIF À MONTER SUR UN VÉHICULE À MOTEUR

(30) Priorität: 28.07.2014 DE 102014010936
(43) Veröffentlichungstag der Anmeldung: 07.06.2017
(73) Patentinhaber: S.M.S. Smart Microwave Sensors GmbH, 38108 Braunschweig (DE)
(72) Erfinder: DÖBBELIN, Stefan, 30900 Wedemark (DE); MENDE, Ralph, 38106 Braunschweig (DE)
(74) Vertreter: Gramm, Lins & Partner Patent- und Rechtsanwälte PartGmbB
(86) Internationale Anmeldenummer: PCT/EP2015/001547
(87) Internationale Veröffentlichungsnummer: WO 2016/015856

(56) Entgegenhaltungen:
- WO-A1-2007/068459
- DE-A1- 4 200 997
- DE-A1-102005 013 335
- DE-A1-102012 214 979
- FR-A1- 2 995 269
- US-A1- 2009 256 698
- US-A1- 2012 041 632

## Beschreibung

Die Erfindung betrifft eine Vorrichtung zum Anordnen an einem Heck eines Kraftfahrzeugs.

Vorrichtungen, die als zusätzliche Ausstattung an Kraftfahrzeugen angeordnet werden können, sind aus dem Stand der Technik seit langem bekannt. Sie können unter ästhetischen Gesichtspunkten verwendet und am Kraftfahrzeug positioniert werden oder Zusatzfunktionen ermöglichen, die herstellerseitig nicht ins Kraftfahrzeug integriert wurden.

Aus der DE 10 2005 013 335 A1 ist beispielsweise eine Vorrichtung zur Verwendung in/an einem Kraftfahrzeug bekannt, mittels welcher eine Warnung an ein nachfolgendes Kraftfahrzeug ausgegeben werden kann. Hierzu erfolgt insbesondere eine Messung des Abstands und/oder der Größe der Relativgeschwindigkeit zwischen den beiden Fahrzeugen, wobei nach Auswertung dieser Parameter und Vergleich mit einem Schwellenwert ggf. eine Warnung in akustischer oder optischer Weise erfolgt.

Aus der US 2009/0256698 A1 ist weiterhin eine ähnliche Vorrichtung bekannt, bei welchem eine Warnung des nachfolgenden Verkehrs in Abhängigkeit vom Abstand des nachfolgenden Fahrzeugs und der eigenen Geschwindigkeit erfolgt. Hierdurch soll insbesondere dichtes Auffahren signalisiert werden. Gleichzeitig und zusätzlich ist auch eine Warnung des Fahrers des mit der Vorrichtung ausgerüsteten Fahrzeugs, beispielsweise durch eine Lampe im Cockpit, möglich.

Im Straßenverkehr kommt es insbesondere auf vielbefahrenen Verkehrswegen, beispielsweise Autobahnen, zu Auffahrunfällen, bei denen neben einem oftmals erheblichen Sachschäden nicht selten Tote oder Verletzte zu beklagen sind. An diesen Unfällen sind oftmals Lastkraftwagen beteiligt, da diese aufgrund ihrer großen Masse bei Unfällen mit wesentlich kleineren Personenkraftwagen immensen Schaden verursachen können und bei Auffahrunfällen mit anderen Lastkraftwagen praktisch keine den Fahrer schützende Knautschzone vorhanden ist. Der Erfindung liegt daher die Aufgabe zugrunde, eine Vorrichtung zum Anordnen an einem Kraftfahrzeug vorzuschlagen, durch die die Verkehrssicherheit im Straßenverkehr erhöht werden kann und die mit geringem Aufwand am Kraftfahrzeug befestigbar ist.

Die Erfindung löst die gestellte Aufgabe durch eine Vorrichtung zum Anordnen an einem Heck eines Kraftfahrzeugs, die eine Geschwindigkeitsmesseinrichtung zum Bestimmen einer Größe und einer Richtung einer Relativgeschwindigkeit zwischen einem Gegenstand und der Vorrichtung, eine Warneinrichtung zum Aussenden eines Warnsignals in Richtung auf den Gegenstand und eine elektrische Steuerung aufweist, wobei die elektrische Steuerung eingerichtet ist, zumindest auch mittels der bestimmten Größe und Richtung der Relativgeschwindigkeit zu prüfen, ob ein vorbestimmtes Warnkriterium erfüllt ist und in diesem Fall über die Warneinrichtung das Warnsignal auszusenden, wobei die Vorrichtung eine Beschleunigungsmesseinrichtung zum Bestimmen einer Querbeschleunigung aufweist, und die elektrische Steuerung eingerichtet ist, aus der bestimmten Größe und Richtung der Relativgeschwindigkeit und der bestimmten Querbeschleunigung einen Kurvenradius zu ermitteln, der ebenfalls zur Prüfung, ob das Warnkriterium erfüllt ist, verwendet wird.

Die Vorrichtung wird erfindungsgemäß am Heck eines Kraftfahrzeugs, beispielsweise eines Lastkraftwagens, angeordnet und bestimmt über die Geschwindigkeitsmesseinrichtung die Relativgeschwindigkeit zwischen einem Gegenstand und der Vorrichtung. Bei dem Gegenstand handelt es sich vorteilhafterweise um ein dem Kraftfahrzeug, an dem die Vorrichtung angeordnet ist, folgendes Kraftfahrzeug. Überschreitet die so bestimmte Relativgeschwindigkeit zwischen der Vorrichtung und damit dem Fahrzeug, an dem die Vorrichtung angeordnet ist, und dem folgenden Fahrzeug einen vorbestimmten Grenzwert, ist dies ein Kriterium dafür, dass ein Warnsignal ausgesendet wird. Dieses wird über die Warneinrichtung in Richtung auf den Gegenstand, im vorliegenden Fall also in Richtung auf das sich zu schnell nähernde nachfolgende Fahrzeug, ausgesandt, so dass der Fahrer des nachfolgenden Fahrzeuges das Warnsignal erhält und seine Relativgeschwindigkeit zu dem Fahrzeug, an dem die Vorrichtung angeordnet ist, anpassen, insbesondere reduzieren, kann. Dies alles geschieht, ohne dass der Fahrer des Fahrzeugs, an dem die Vorrichtung angeordnet ist, davon Kenntnis erlangen muss. Er wird insbesondere nicht durch Warn- oder Alarmsignale erschreckt und/oder in seiner Konzentration beeinflusst, sondern kann seine ganze Konzentration und Aufmerksamkeit weiterhin auf den vor ihm liegenden Verkehr richten.

Die Vorrichtung ist besonders einfach am Kraftfahrzeug anzuordnen, da sie ausschließlich beispielsweise am Heck des Kraftfahrzeuges positioniert werden muss. Sowohl die Geschwindigkeitsmesseinrichtung als auch die Warneinrichtung sind in diesem Fall auf das nachfolgende Fahrzeug gerichtet, so dass keinerlei Verbindungen in die Fahrerkabine des Fahrzeugs, an dem die Vorrichtung angeordnet wird, gelegt werden müssen oder nötig sind. Dies ist insbesondere bei Lastkraftwagen, die über Anhänger und/oder Auflieger verfügen können, von großem Vorteil.

Die Vorrichtung kann dabei aus mehreren unterschiedlichen Elementen bestehen, die gegebenenfalls an unterschiedlichen Stellen am Kraftfahrzeug positioniert werden können. So kann es beispielsweise sinnvoll sein, die Geschwindigkeitsmesseinrichtung im unteren Bereich eines Kraftfahrzeughecks anzuordnen, um auch herannahende Fahrzeuge erkennen zu können, die eine relativ geringe Höhe aufweisen, beispielsweise Personenkraftwagen oder Sportwagen. Die Warneinrichtung kann vorteilhafterweise eher im oberen Bereich des Kraftfahrzeugs, an dem die Vorrichtung anzuordnen ist, positioniert werden, um beispielsweise ein optisches Warnsignal weithin sichtbar aussenden zu können. Zudem ist die Positionierung im oberen Bereich beispielsweise an einem Heck eines Lastkraftwagens dann sinnvoll, wenn der Fahrer eines nachfolgenden Lastkraftwagens gewarnt werden soll.

Vorteilhafterweise verfügt die Geschwindigkeitsmesseinrichtung über wenigstens einen Sender zum Aussenden einer elektromagnetischen Sendestrahlung und wenigstens zwei Empfänger zum Empfangen von von dem Gegenstand reflektierter Sendestrahlung. Über den Sender wird eine elektromagnetische Sendestrahlung in Richtung auf den Gegenstand, vorzugsweise also ein nachfolgendes Fahrzeug, ausgesandt. Dabei ist es oftmals ausreichend, die ausgesandte Sendestrahlung in einen relativ großen Raumbereich auszusenden, ohne speziell auf beispielsweise ein nachfolgendes Fahrzeug fokussiert zu sein.

Gegenstände, auf die die elektromagnetische Sendestrahlung trifft, reflektieren zumindest einen Teil dieser Sendestrahlung, der anschließend von den Empfängern der Geschwindigkeitsmesseinrichtung empfangen und aufgenommen wird. Über das Aussenden der elektromagnetischen Strahlung, das gepulst oder kontinuierlich erfolgen kann, kann in aus dem Stand der Technik an sich bekannter Weise die Geschwindigkeit des Gegenstand relativ zur Geschwindigkeitsmesseinrichtung und damit relativ zur Vorrichtung und dem Kraftfahrzeug, an dem sie angeordnet ist, bestimmt werden. Dadurch, dass die reflektierte Sendestrahlung von wenigstens zwei Empfängern aufgenommen wird, lässt sich nicht nur aufgrund von Laufzeitunterschieden zweier nacheinander ausgesandter Strahlungspulse die Größe der Relativgeschwindigkeit, sondern auch die Richtung, in der sich der Gegenstand befindet, bestimmen. Aus den Ergebnissen mehrerer zeitlich aufeinander folgender derartiger Messungen lässt sich daher sowohl die Größe der Geschwindigkeit als auch die Richtung des Geschwindigkeitsvektors der Relativgeschwindigkeit bestimmen.

Das Warnkriterium kann dabei beispielsweise so gewählt werden, dass ein Warnsignal ausgesandt wird, wenn die Relativgeschwindigkeit einen vorbestimmten Grenzwert überschreitet und die Richtung der Relativgeschwindigkeit auf die Vorrichtung gerichtet ist oder an der Vorrichtung nur in einem relativ geringen Abstand, von beispielsweise ein bis zwei Metern, vorbeiführt. In diesem Fall ist davon auszugehen, dass bei unveränderter Richtung und Größe der Relativgeschwindigkeit eine Kollision des Gegenstandes mit der Vorrichtung und dem Kraftfahrzeug, an dem sie befestigt ist, bevorsteht. Vorteilhafterweise handelt es sich bei der Sendestrahlung um Radarstrahlung.

Ein Vorteil der Vorrichtung mit einer derartigen Geschwindigkeitsmesseinrichtung liegt unabhängig von der Art der ausgesandten elektromagnetischen Sendestrahlung darin, dass in einer bevorzugten Ausgestaltung genau ein Sender und genau zwei Empfänger benötigt werden. Ein komplizierter Aufbau mit mehreren Sendern wird dadurch unnötig, so dass die Positionierung und die Montage der Vorrichtung am Kraftfahrzeug, insbesondere am Heck eines Lastkraftwagens, weiter vereinfacht und fehlerhafte Befestigungen oder Ausrichtung vermieden werden. Dadurch wird die Handhabung der Vorrichtung besonders einfach und auf diese Weise die Verkehrssicherheit besonders zuverlässig erhöht.

Erfindungsgemäß verfügt die Vorrichtung über eine Beschleunigungsmesseinrichtung zum Bestimmen einer Querbeschleunigung und die elektrische Steuerung der Vorrichtung ist eingerichtet, aus einer bestimmten Größe und Richtung einer Relativgeschwindigkeit und einer bestimmten Querbeschleunigung einen Kurvenradius zu ermitteln, der ebenfalls zur Prüfung, ob das Warnkriterium erfüllt ist, verwendet wird. Dazu muss die Relativgeschwindigkeit relativ zu einem feststehenden Gegenstand, beispielsweise einen Baum, Schild oder Gebäude, gemessen werden, so dass sie der Eingangsgeschwindigkeit des Kraftfahrzeugs entspricht.

Die Beschleunigungsmesseinrichtung ist dabei vorzugsweise so innerhalb oder an der Vorrichtung positioniert, dass durch sie Beschleunigungen messbar sind, die im Wesentlichen senkrecht auf der zu erwartenden Fahrtrichtung des Kraftfahrzeuges, an dem die Vorrichtung befestigt ist, stehen. Diese Beschleunigungen treten auf, wenn das Kraftfahrzeug, an dem die Vorrichtung befestigt ist, eine Kurve fährt. Aus der aufgetretenen Beschleunigung und einer beispielsweise durch die Geschwindigkeitsmesseinrichtung bestimmten Größe der Relativgeschwindigkeit relativ zu einem Gegenstand, der fest mit der Straße verbunden ist, beispielsweise ein Baum, Schild oder eine Leitplanke, lässt sich der Kurvenradius der Kurve bestimmen, die das Kraftfahrzeug durchfährt. Diese Größe kann selbstverständlich mit dazu verwendet werden, zu prüfen, ob das Warnkriterium erfüllt ist. So kann durch den Kurvenradius beispielsweise ermittelt werden, ob bei unveränderter Fortführung der vorhandenen Bewegung eine Kollision bevorsteht. Ist dies der Fall, kann ein Warnsignal ausgesandt werden.

Vorzugsweise ist die elektrische Steuerung eingerichtet, eine Änderung der Größe und/oder der Richtung der Relativgeschwindigkeit zu bestimmen, die ebenfalls zur Prüfung, ob das Warnkriterium erfüllt ist, verwendet wird. Aus einer Mehrzahl nacheinander durchgeführter Bestimmungen der Größe und der Richtung der Relativgeschwindigkeit lässt sich in der elektrischen Steuerung auch eine Änderung dieser Größen bestimmen. Auch diese Größen können zur Bestimmung des Warnkriteriums und zur Überprüfung, ob das Warnkriterium erfüllt ist, verwendet werden.

Als vorteilhaft hat sich herausgestellt, wenn die elektrische Steuerung eingerichtet ist, zur Prüfung, ob das Warnkriterium erfüllt ist, eine angenommene maximale Verzögerung des Gegenstandes und/oder ermittelte und/oder angenommene Straßenverhältnisse und/oder eine ermittelte und/oder angenommene Qualität der Messungen und/oder eine bestimmte Objektklasse des Gegenstandes zu verwenden. Alle diese Größen können die Qualität einer Aussage darüber, ob voraussichtlich eine Kollision bevorsteht, verbessern. Je größer beispielsweise die maximale Verzögerung eines Gegenstandes, beispielsweise eines dem Kraftfahrzeug folgenden zweiten Kraftfahrzeuges oder Lastkraftwagens, ist, desto eher kann der Fahrer dieses zweiten Kraftfahrzeuges eine Kollision vermeiden. Diese angenommene maximale Verzögerung, die beispielsweise als fester Wert in der elektrischen Steuerung beziehungsweise einem Datenspeicher, auf den diese Zugriff hat, abgelegt ist, kann beispielsweise von Straßenbedingungen abhängig gemacht werden, die ermittelt oder angenommen werden. Dazu ist es beispielsweise möglich, anhand von zusätzlichen Sensoren, beispielsweise Temperatur und/oder Luftfeuchtigkeit die Straßenverhältnisse zumindest annähernd zu ermitteln. Bei tiefen Temperaturen und hoher Luftfeuchtigkeit besteht das Risiko, dass die Straße vereist oder überfroren ist, so dass die maximale anzunehmende Verzögerung des nachfolgenden Kraftfahrzeuges reduziert werden muss. Zudem ist es beispielsweise bei einer Geschwindigkeitsmessung über Radarstrahlung, wie sie bereits beschrieben wurde, möglich, anhand des empfangenen Signals zu bestimmen, ob es regnet. Auch dies hat Einfluss auf die Straßenverhältnisse, so dass auch diese Größen die maximale angenommene Verzögerung des jeweiligen nachfolgenden Kraftfahrzeuges beeinflussen können.

Die Ermittlung oder Annahme von Straßenverhältnissen ist jedoch nicht nur für die Anpassung eines anzunehmenden Wertes für die maximale Verzögerung des nachfolgenden Kraftfahrzeuges von Interesse. Unabhängig davon haben beispielsweise starker Regen einen starken Einfluss auf die Sichtverhältnisse, die durch derartigen Niederschlag oder beispielsweise starken auftretenden Nebel stark verschlechtert werden können, wodurch die Kollisionswahrscheinlichkeit bei ansonsten gleichen Parametern steigt. Diese Parameter beinhalten dabei die bereits genannten Größe und Richtung der Relativgeschwindigkeit, den Kurvenradius des Kraftfahrzeugs, an dem sich die Vorrichtung befindet, eine Änderung der Relativgeschwindigkeit oder sonstige Größen, die bereits genannt wurden.

Auch die Qualität der Messergebnisse kann in die Prüfung, ob das Warnkriterium erfüllt ist, einfließen. So kann zum Beispiel berücksichtigt werden, dass etwa in einem Tunnel eine große Anzahl und Dichte von Metallteilen vorhanden ist, die beispielsweise in der Tunnelverkleidung oder in Form von Leitplanken vorliegen können. Dies hat insbesondere bei der Geschwindigkeitsmessung über elektromagnetische Strahlung ein erhebliches Störsignal zur Folge, so dass die ermittelten Daten gegebenenfalls mit größeren Fehlerwerten versehen werden müssten. Alternativ oder zusätzlich dazu kann auch eine Objektklasse des Gegenstandes, zu dem die Relativgeschwindigkeit bestimmt wird, ermittelt werden. Dies kann beispielsweise aus einer Strahlungssignatur der empfangenen reflektierten Strahlung geschehen, so dass beispielsweise zwischen einem herannahenden Motorrad und einem herannahenden Lastkraftwagen unterschieden werden kann. Diese Objektklasse kann beispielsweise die maximale anzunehmende Verzögerung des Gegenstandes sowie eine Ausweichwahrscheinlichkeit beeinflussen. Durch eine Ausweichwahrscheinlichkeit, die ebenfalls Einfluss auf die Prüfung des Warnkriteriums haben kann, ist beispielsweise die Fähigkeit des Gegenstandes abgebildet, in kurzer Zeit möglichst enge Kurven zu fahren. Dies ist für ein Ausweichen notwendig, die Fähigkeit dazu hängt jedoch sowohl von der Objektklasse als auch beispielsweise von der Größe der Geschwindigkeit des Gegenstandes, relativ zur Straße, die aus der Eigengeschwindigkeit der Vorrichtung und der Relativgeschwindigkeit zwischen der Vorrichtung und dem Gegenstand ermittelt werden kann, ab.

Die Qualität der Messung kann insbesondere bei der Messung über reflektierte elektromagnetische Strahlung auch dadurch beeinträchtigt werden, dass beispielsweise eine Vielzahl von Fahrzeugen auf dem jeweiligen Verkehrsweg, auf dem sich auch das Kraftfahrzeug bewegt, an dem die Vorrichtung befestigt ist, vorhanden ist.

Über periodisch oder kontinuierlich bestimmte Messungen des Kurvenradius des Kraftfahrzeugs, an dem sich die Vorrichtung befindet, und eine kontinuierliche Überwachung der Richtung der Relativgeschwindigkeit zum nachfolgenden Gegenstand und deren Änderung lässt sich der Verlauf des Verkehrsweges bestimmen, auf dem sich das Fahrzeug und der nachfolgende Gegenstand bewegen. Auch dies kann selbstverständlich herangezogen werden, um beispielsweise eine Kollisionswahrscheinlichkeit zu bestimmen oder auf sonstige Weise zu prüfen, ob das Warnkriterium erfüllt ist. Verfügt der Verkehrsweg beispielsweise über mehrere entgegengesetzt verlaufende Kurven, hat dies für die Richtung der Relativgeschwindigkeit zur Folge, dass zu einem Zeitpunkt die Relativgeschwindigkeit beispielsweise auf der linken Seite der Vorrichtung vorbeiläuft, während sie zu einem späteren Zeitpunkt auf der rechten Seite der Vorrichtung vorbeiläuft. Zwischen diesen beiden Zeitpunkten ist die Richtung der Relativgeschwindigkeit zu einem bestimmten Zeitpunkt direkt auf die Vorrichtung selbst gerichtet, so dass man bei der Betrachtung nur einer Momentaufnahme von einer erhöhten Kollisionswahrscheinlichkeit ausgehen müsste, obwohl dies in der Realität nicht der Fall ist. Über eine Speicherung der aus der Geschwindigkeit und der Richtung der Relativgeschwindigkeit und dem selbstgefahrenen Kurvenradius ermittelten Daten lässt sich folglich ebenfalls die Qualität des Warnkriteriums erhöhen und somit die Anzahl der fälschlicherweise ausgelösten Warnungen reduzieren. Da diese gegebenenfalls deutliche optische und/oder akustische Warnsignale sind, lässt sich durch die Vermeidung unnötiger Warnsignale die Verkehrssicherheit erhöhen.

Vorteilhafterweise ist die elektrische Steuerung eingerichtet, aus allen zur Prüfung zu verwendenden Größen eine Kollisionswahrscheinlichkeit zu errechnen und ein Warnsignal auszusenden, wenn die Kollisionswahrscheinlichkeit einen vorbestimmten Grenzwert überschreitet. Alternativ oder zusätzlich dazu ist es auch möglich, die zur Prüfung zu verwendenden Größen mit unterschiedlichen Bereichen für die jeweiligen Größen beispielsweise in Tabellenform zu vergleichen und aus der Kombination der jeweiligen Bereiche das Warnkriterium zu generieren. So kann beispielsweise das Warnkriterium so definiert sein, dass ein Warnsignal ausgelöst wird, wenn die Größe der Relativgeschwindigkeit einen vorbestimmten Grenzwert überschreitet und die Richtung der Relativgeschwindigkeit die Vorrichtung um maximal zwei Meter, drei Meter oder vier Meter, verfehlt. Dies ist ein relativ ungenaues Warnkriterium, da insbesondere bei gewundenen Verkehrswegen oder Kurvenfahrten eine Momentaufnahme der Richtung der Relativgeschwindigkeit keine zuverlässige Aussage über die Frage erlaubt, ob ein Warnsignal ausgesendet werden sollte.

Vorteilhafterweise verfügt die Vorrichtung über eine Positionsmesseinrichtung zum Bestimmen einer Position des Gegenstandes relativ zu der Vorrichtung, wobei der vorbestimmte Grenzwert von der Position abhängt. Besonders bevorzugt ist die Positionsmesseinrichtung Teil der Geschwindigkeitsmesseinrichtung und/oder der elektrischen Steuerung. Insbesondere für den Fall, dass die Geschwindigkeitsmesseinrichtung einen Sender zum Aussenden elektromagnetischer Sendestrahlung aufweist, kann beispielsweise aus der Laufzeit dieser elektromagnetischen Sendestrahlung vom Aussenden durch den Sender bis zum Empfangen durch den Empfänger bestimmt werden, wie weit der Gegenstand, vorteilhafterweise also ein nachfolgendes Kraftfahrzeug, von der Vorrichtung und damit von dem Kraftfahrzeug, an dem die Vorrichtung befestigt ist, entfernt ist. Durch die Verwendung zweier Empfänger lässt sich die Richtung, aus der die reflektierte Strahlung kommt, bestimmen, so dass die Position ermittelbar ist. Der vorbestimmte Grenzwert, bei dem die Warneinrichtung zum Aussenden des Warnsignals aktiviert wird, kann dabei vorteilhafterweise von der so bestimmten Position abhängen. Ist der bestimmte Abstand zwischen der Vorrichtung und dem Gegenstand relativ groß, ist auch der vorbestimmte Grenzwert vorteilhafterweise relativ groß zu wählen, da eine relativ große Relativgeschwindigkeit zwischen der Vorrichtung und dem Gegenstand tolerierbar ist. Je näher der Gegenstand, also ein nachfolgendes Fahrzeug, der Vorrichtung kommt, desto geringer wird vorteilhafterweise auch der vorbestimmte Grenzwert gewählt. Je näher sich der Gegenstand und die Vorrichtung kommen, desto weniger Zeit bleibt im Straßenverkehr dem Fahrer des nachfolgenden Fahrzeuges, um auf Änderungen im Fahrverhalten des Fahrzeuges, an dem sich die Vorrichtung befindet, zu reagieren. Zudem ist die Wahrscheinlichkeit eines Auffahrunfalles nicht nur von der Relativgeschwindigkeit zwischen den beiden Fahrzeugen, sondern auch vom Abstand der beiden Fahrzeuge voneinander abhängig.

Aus der Änderung der Richtung, aus der das reflektierte Signal stammt, lässt sich ebenfalls eine Richtung der Relativgeschwindigkeit zwischen dem Gegenstand und der Vorrichtung bestimmen. Eine Aussendung des Warnsignales nur aufgrund des Abstandes zwischen der Vorrichtung und dem nachfolgenden Gegenstand führt zu einer großen Anzahl von unnötigen Warnsignalen, da beispielsweise auf der Autobahn ein überholendes Kraftfahrzeug mit relativ großer Relativgeschwindigkeit in sehr kurzem Abstand an der Vorrichtung vorbeifährt, ohne dass ein Warnsignal nötig ist. Es ist daher von Vorteil, auch die Richtung der Bewegung des Gegenstandes und damit auch die Richtung der Relativgeschwindigkeit zwischen dem Gegenstand und der Vorrichtung zu bestimmen und in die Prüfung der Frage einzubeziehen, ob ein Warnsignal ausgelöst werden soll.

In einer bevorzugten Ausgestaltung ist die elektrische Steuerung in der Lage, auch die Absolutgeschwindigkeit der Vorrichtung und damit des Fahrzeuges, an dem die Vorrichtung angeordnet ist, zu bestimmen. So wird beispielsweise die von einem Sender der Geschwindigkeitsmesseinrichtung ausgesandte elektromagnetische Sendestrahlung nicht nur vom Gegenstand, also dem nachfolgenden Fahrzeug, reflektiert. Auch andere Gegenstände, beispielsweise Fahrbahnbegrenzungspfähle, Verkehrsschilder oder Bäume und/oder Gebäude am Straßenrand reflektieren einen Teil der ausgesandten Sendestrahlung, der vom Empfänger der Geschwindigkeitsmesseinrichtung empfangen werden kann. Auf diese Weise lässt sich auch die Relativgeschwindigkeit der Vorrichtung zu am Straßenrand fest installierten Gegenständen bestimmen, so dass auch die Absolutgeschwindigkeit des Kraftfahrzeuges, an dem sich die Vorrichtung befindet, bestimmt werden kann, ohne dass auf fahrzeuginterne elektronische Einrichtungen zurückgegriffen werden muss. Der vorbestimmte Grenzwert kann auch von der so bestimmten Absolutgeschwindigkeit der Vorrichtung abhängig sein. Je langsamer dabei die Vorrichtung relativ zur Straße ist, desto größer kann der vorbestimmte Grenzwert gewählt werden, den die bestimmte Relativgeschwindigkeit zwischen der Vorrichtung und dem Gegenstand nicht überschreiten darf. Ein Auffahrunfall mit einer gegebenen Relativgeschwindigkeit hat bei relativ geringer Absolutgeschwindigkeit oder beispielsweise Stillstand der Vorrichtung und damit des Kraftfahrzeuges, an dem die Vorrichtung befestigt ist, ein geringeres Schadenspotential als der gleiche Auffahrunfall mit der gleichen Relativgeschwindigkeit bei einer höheren Absolutgeschwindigkeit.

Vorteilhafterweise wird die bestimmte Position zwischen der Vorrichtung und dem Gegenstand einem von mehreren Bereichen zugeordnet, wobei der vorbestimmte Grenzwert von dem Bereich abhängt, insbesondere für Positionen eines Bereiches konstant ist. Die Bereiche können dabei beispielsweise Abstände kleiner als 10 m, Abstände zwischen 10 und 20 m, Abstände zwischen 20 und 50 m und Abstände größer als 50 m umfassen. Der bestimmte Abstand zwischen der Vorrichtung und dem Gegenstand wird dann in den jeweiligen Bereich einsortiert. Der vorbestimmte Grenzwert ist dabei für unterschiedliche bestimmte Abstände verschieden festgelegt. Natürlich sind auch andere Einteilungen der unterschiedlichen Bereiche, beispielsweise in Winkelbereichen, möglich und gegebenenfalls von Vorteil.

Als vorteilhaft hat es sich herausgestellt, wenn die Warneinrichtung zum Aussenden eines akustischen und /oder optischen Warnsignals und/oder ein Funksignal gegebenenfalls mit Verarbeitung im Cockpit eines nachfolgenden Fahrzeuges ausgebildet ist. Die Verwendung von Funksignalen ist insbesondere für "geschlossene Systeme" von Vorteil, die sich dadurch auszeichnen, dass sich nur eine begrenzte Anzahl bekannter Fahrzeuge auf einem geschlossenen Bereich von Verkehrswegen bewegt. Ein Beispiel ist eine Tagebaumiene mit Baggern und Lastkraftwagen, in der keine betriebsfremden Fahrzeuge unterwegs sind. Vorzugsweise ist die Art des Warnsignals von der bestimmten Relativgeschwindigkeit und/oder der bestimmten Position, insbesondere dem Bereich, abhängig. Auch eine Abhängigkeit von der Absolutgeschwindigkeit der Vorrichtung oder der bestimmten Kollisionswahrscheinlichkeit ist möglich. So ist es beispielsweise denkbar, als Warnsignal zunächst ein optisches Signal, beispielsweise ein Blinken oder Aufleuchten einer Leuchteinrichtung, zu verwenden, wenn der vorbestimmte Grenzwert bei einem relativ großen Abstand überschritten wird. Je näher der Gegenstand der Vorrichtung kommt, desto intensiver werden die Warnsignale. Dies kann beispielsweise über eine Steuerung der Helligkeit eines optischen Warnsignals oder dessen Farbe geschehen und/oder der Lautstärke und/oder Frequenz eines akustischen Warnsignals. Bevorzugt können auch unterschiedliche Signale kombiniert werden. Die Verwendung optischer Signale hat den Vorteil, dass unbeteiligte Verkehrsteilnehmer nicht durch plötzlich aktivierte akustische Warnanlagen erschreckt und/oder abgelenkt werden. Zudem können optische Signale deutlich fokussierter abgegeben werden, so dass unbeteiligte Verkehrsteilnehmer nicht gestört und in ihrer Konzentration beeinträchtigt werden.

Akustische Warnsignale haben den Vorteil, dass sie auch von unaufmerksamen oder abgelenkten Fahrern nachfolgender Fahrzeuge wahrgenommen werden können, die gegebenenfalls auf optische Signale nicht oder zu spät reagieren würden.

Vorteilhafterweise verfügt die Vorrichtung über mehrere Warneinrichtungen. Dies können einerseits Warneinrichtungen für unterschiedlichste Signalformen, beispielsweise akustische oder optische Warnsignale sein, aber auch Warneinrichtungen für das Aussenden von Warnsignalen der gleichen Art können mehrfach vorhanden sein. So ist es beispielsweise von Vorteil, mehrere Leuchtelemente am Kraftfahrzeug zu positionieren, um optische Warnsignale beispielsweise in unterschiedlicher Intensität, Farbe oder Helligkeit aussenden zu können. Auch die Verwendung von Anzeigeelementen, bei denen das Warnsignal eine optisch aufleuchtende Textnachricht, beispielsweise das Wort "Achtung" ist, ist möglich.

Vorteilhafterweise sind die mehreren Warneinrichtungen voneinander beabstandet am Kraftfahrzeug befestigbar. So kann es sinnvoll sein, beispielsweise unterschiedliche Warneinrichtungen an unterschiedlichen Höhen am Heck eines Kraftfahrzeuges zu befestigen. Dabei werden beispielsweise im oberen Bereich eines Lastkraftwagens angeordnete optische Warnelemente von Fahrern eines Personenkraftwagens womöglich nicht wahrgenommen, da sie sich außerhalb des üblichen Blickfeldes befinden und die optischen Signale über das nachfolgende Fahrzeug hinweg gesendet werden. Genauso werden im unteren Bereich eines Hecks eines Lastkraftwagens angeordnete Warnleuchten gegebenenfalls von Fahrern nachfolgender Lastkraftwagen nur bedingt wahrgenommen. Um hier eine größtmögliche Sicherheit für alle Verkehrsteilnehmer zu erreichen, ist es daher von Vorteil, unterschiedliche Warneinrichtungen beispielsweise an unterschiedlichen Positionen im Kraftfahrzeug zu befestigen.

Als besonders vorteilhaft hat sich herausgestellt, dass die Vorrichtung lediglich an eine Stromversorgung des Kraftfahrzeuges anzuschließen ist. Dies ist auch bei Lastkraftwagen mit Anhängern und/oder Aufliegern besonders einfach möglich, da eine Stromversorgung ohnehin bis zum Heck eines jeden Kraftfahrzeuges vorhanden ist. Zusätzliche Anschlüsse, beispielsweise an die Bordelektronik oder zum Zugriff auf fahrzeuginterne Sensoren sind nicht nötig. Genauso müssen keine Elemente der Vorrichtung in der Fahrerkabine des Kraftfahrzeuges angeordnet werden, so dass auch in diese Richtung eine Verbindung nicht nötig ist. Dadurch wird der Aufwand bei der Montage der Vorrichtung deutlich reduziert.

Eine elektrische Steuerung im Sinne der vorliegenden Erfindung ist insbesondere eine elektronische Datenverarbeitungseinheit, beispielsweise ein Mikrochip, mit allen weiteren Bauteilen, wie beispielsweise Leitungen, elektronische Datenspeicher und Kommunikationsvorrichtungen, die für die Ermöglichung der beschriebenen Funktionen nötig sind.

In einem gewissen Bereich ist die Selbstorientierung der Vorrichtung möglich, indem aufgenommene und bestimmte Größen, insbesondere Richtungen von Relativgeschwindigkeit auf Plausibilität geprüft werden.

Mit Hilfe einer Zeichnung wird nachfolgend ein Ausführungsbeispiel der vorliegenden Erfindung näher erläutert. Es zeigt:

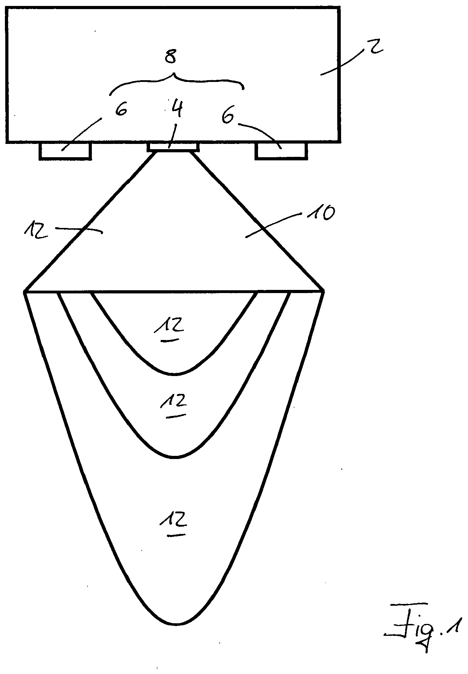

- Figur 1: - die schematische Darstellung einer Vorrichtung gemäß einem ersten Ausführungsbeispiel der vorliegenden Erfindung.

Figur 1 zeigt das Heck eines Kraftfahrzeuges 2, das beispielsweise ein Lastkraftwagen sein kann. Daran ist zentral eine Geschwindigkeitsmesseinrichtung 4 angeordnet. Rechts und links der Geschwindigkeitsmesseinrichtung 4 befinden sich zwei Warneinrichtungen 6, die gemeinsam mit der Geschwindigkeitsmesseinrichtung 4 und einer nicht dargestellten elektrischen Steuerung eine Vorrichtung 8 gemäß einem Ausführungsbeispiel der vorliegenden Erfindung bilden.

Die Geschwindigkeitsmesseinrichtung 4 verfügt über einen nicht dargestellten Sender zum Aussenden elektromagnetischer Sendestrahlung. Diese wird in einem Sendebereich 10 ausgesandt, der sich sendekeulenförmig am Heck des Kraftfahrzeuges 2 aufspannt. Ein Gegenstand, der sich im Sendebereich 10 befindet, reflektiert zumindest einen Teil der ausgesandten Sendestrahlung, die von einem ebenfalls nicht dargestellten Empfänger der Geschwindigkeitsmesseinrichtung empfangen wird. Die elektrische Steuerung ist im gezeigten Ausführungsbeispiel in der Lage, sowohl die Relativgeschwindigkeit der Vorrichtung 8 relativ zum Gegenstand zu bestimmen als auch den Abstand zwischen der Vorrichtung 8 und dem Gegenstand. Der Sendebereich 10 ist dabei in vier Bereiche 12 aufgeteilt. Überschreitet die bestimmte Relativgeschwindigkeit zwischen der Vorrichtung 8 und dem nicht dargestellten Gegenstand einen vorbestimmten Grenzwert, wird wenigstens eine der Warneinrichtungen 6 aktiviert und sendet ein Warnsignal in Richtung auf den Gegenstand aus. Der vorbestimmte Grenzwert kann dabei davon abhängen, in welchem Bereich 12 sich der Gegenstand befindet. In einer bevorzugten Ausgestaltung der Vorrichtung 8 gemäß einem Ausführungsbeispiel der vorliegenden Erfindung kann beispielsweise die elektrische Steuerung insbesondere durch Verfolgen der Bewegung des Gegenstandes auch eine Orientierung beispielsweise des Senders der Geschwindigkeitsmesseinrichtung relativ zum Kraftfahrzeug 2 bzw. relativ zum Gegenstand bestimmen. Wird die Vorrichtung 8 nicht beispielsweise exakt nach hinten am Kraftfahrzeug ausgerichtet, können gewisse Winkelabweichungen in aus dem Stand der Technik prinzipiell bekannter Weise ausgeglichen werden.

### Bezugszeichenliste

- 2: Kraftfahrzeug
- 4: Geschwindigkeitsmesseinrichtung
- 6: Warneinrichtung
- 8: Vorrichtung
- 10: Sendebereich
- 12: Bereich

## Patentansprüche

1. Vorrichtung (8) zum Anordnen an einem Heck eines Kraftfahrzeugs (2), wobei die Vorrichtung (8)
a. eine Geschwindigkeitsmesseinrichtung (4) zum Bestimmen einer Größe und einer Richtung einer Relativgeschwindigkeit zwischen einem Gegenstand und der Vorrichtung (8),
b. wenigstens eine Warneinrichtung (6) zum Aussenden eines Warnsignals in Richtung auf den Gegenstand und
c. eine elektrische Steuerung aufweist,
wobei die elektrische Steuerung eingerichtet ist, zumindest auch mittels der bestimmten Größe und Richtung der Relativgeschwindigkeit zu prüfen, ob ein vorbestimmtes Warnkriterium erfüllt ist und in diesem Fall über die wenigstens eine Warneinrichtung (6) das Warnsignal auszusenden, **dadurch gekennzeichnet, dass** die Vorrichtung (8) eine Beschleunigungsmesseinrichtung zum Bestimmen einer Querbeschleunigung aufweist, und die elektrische Steuerung eingerichtet ist, aus der bestimmten Größe und Richtung der Relativgeschwindigkeit und der bestimmten Querbeschleunigung einen Kurvenradius zu ermitteln, der ebenfalls zur Prüfung, ob das Warnkriterium erfüllt ist, verwendet wird.

2. Vorrichtung (8) nach Anspruch 1, **dadurch gekennzeichnet, dass** die elektrische Steuerung eingerichtet ist, eine Änderung der Größe und Richtung der Relativgeschwindigkeit zu bestimmen, die ebenfalls zur Prüfung, ob das Warnkriterium erfüllt ist, verwendet wird.

3. Vorrichtung (8) nach einem der vorstehenden Ansprüche, **dadurch gekennzeichnet, dass** die elektrische Steuerung eingerichtet ist, zur Prüfung, ob das Warnkriterium erfüllt ist, eine angenommene maximale Verzögerung des Gegenstandes und/oder ermittelte und/oder angenommene Straßenverhältnisse und/oder eine ermittelte und/oder angenommene Qualität der Messungen und/oder eine bestimmte Objektklasse zu verwenden.

4. Vorrichtung (8) nach einem der vorstehenden Ansprüche, **dadurch gekennzeichnet, dass** die elektrische Steuerung eingerichtet ist, aus allen zur Prüfung zu verwendeten Größen eine Kollisionswahrscheinlichkeit zu errechnen und das Warnsignal auszusehen, wenn die Kollisionswahrscheinlichkeit einen vorbestimmten Grenzwert überschreitet.

5. Vorrichtung (8) nach Anspruch 4, **dadurch gekennzeichnet, dass** die Vorrichtung (8) eine Positionsmesseinrichtung zum Bestimmen einer Position des Gegenstandes relativ zu der Vorrichtung (8) aufweist und der vorbestimmte Grenzwert von der Position abhängt.

6. Vorrichtung (8) nach Anspruch 5, **dadurch gekennzeichnet, dass** die bestimmte Position einem von mehreren Bereichen (12) zugeordnet wird und der vorbestimmte Grenzwert von dem Bereich (12) abhängt, insbesondere für Positionen eines Bereichs (12) konstant ist.

7. Vorrichtung (8) nach einem der vorstehenden Ansprüche, **dadurch gekennzeichnet, dass** die wenigstens eine Warneinrichtung (6) zum Aussenden eines akustischen und/oder optischen Warnsignals ausgebildet ist.

8. Vorrichtung (8) nach Anspruch 7, **dadurch gekennzeichnet, dass** die Art des Warnsignals von der bestimmten Relativgeschwindigkeit und/oder der bestimmten Position, insbesondere dem Bereich (12), abhängt.

9. Vorrichtung (8) nach einem der vorstehenden Ansprüche, **dadurch gekennzeichnet, dass** die Vorrichtung (8) mehrere Warneinrichtungen (6) aufweist.

10. Vorrichtung (8) nach Anspruch 9, **dadurch gekennzeichnet, dass** die Warneinrichtungen (6) voneinander beabstandet am Kraftfahrzeug (2) befestigbar sind.

11. Vorrichtung (8) nach einem der vorstehenden Ansprüche, **dadurch gekennzeichnet, dass** die Vorrichtung (8) lediglich an eine Stromversorgung des Kraftfahrzeugs (2) anzuschließen ist.

## Claims

1. An apparatus (8) to be arranged on a motor vehicle (2), wherein the apparatus (8) comprises
- a velocity-measuring device (4) for determining magnitude and direction of a relative velocity between an object and the apparatus (8),
- at least one warning device (6) for emitting a warning signal in the direction of the object, and
- an electric controller,
wherein the electric controller is configured to check, at least by means of a determined magnitude and direction of a relative velocity as well, whether a predetermined warning criterion is satisfied and to emit a warning signal in this case by way of the at least one warning device (6) **characterized in that** the apparatus (8) comprises an acceleration-measuring device for determining a transverse acceleration and the electric controller is configured to ascertain a curve radius from a determined magnitude and direction of the relative velocity and a determined transverse acceleration, said curve radius likewise being used to check whether the warning criterion is satisfied.

2. The apparatus (8) as claimed in claim 1, **characterized in that** the electric controller is configured to determine a change in the magnitude and direction of the relative velocity, which is likewise used to check whether the warning criterion is satisfied.

3. The apparatus (8) as claimed in one of the preceding claims, **characterized in that** the electric controller is configured to use an assumed maximum deceleration of the object and/or ascertained and/or assumed road conditions and/or an ascertained and/or assumed quality of the measurements and/or a certain object class for checking whether the warning criterion is satisfied.

4. The apparatus (8) as claimed in one of the preceding claims, **characterized in that** the electric controller is configured to calculate a collision probability from all variables used within the scope of checks and to output a warning signal if the collision probability exceeds a predetermined threshold.

5. The apparatus (8) as claimed in claim 4, **characterized in that** the apparatus (8) comprises a position-measuring device for determining a position of the object from the apparatus (8) and the predetermined threshold depends on the position.

6. The apparatus (8) as claimed in claim 5, **characterized in that** the determined position is assigned to one of a plurality of regions (12) and the predetermined threshold depends on the region (12), in particular said threshold is constant for positions in a region (12).

7. The apparatus (8) as claimed in one of the preceding claims, **characterized in that** the at least one warning device (6) is embodied to emit an acoustic and/or optical warning signal.

8. The apparatus (8) as claimed in claim 8, **characterized in that** the type of warning signal depends on the determined relative velocity and/or the determined position, in particular the region (12) .

9. The apparatus (8) as claimed in one of the preceding claims, **characterized in that** the apparatus (8) comprises a plurality of warning devices (6).

10. The apparatus (8) as claimed in claim 9, **characterized in that** the warning devices (6) are fastenable to the motor vehicle (2) at a distance from one another.

11. The apparatus (8) as claimed in one of the preceding claims, **characterized in that** the apparatus (8) only needs to be connected to a power supply of the motor vehicle (2).

## Revendications

1. Dispositif (8) destiné à être placé à l'arrière d'un véhicule automobile (2), le dispositif (8) comprenant
a. un moyen de mesure de vitesse (4) pour définir une grandeur et une direction d'une vitesse relative entre un objet et le dispositif (8),
b. au moins un moyen d'avertissement (6) pour émettre un signal d'avertissement en direction de l'objet, et
c. une commande électrique,
la commande électrique étant conçue pour vérifier, au moins également à l'aide de la grandeur et de la direction définies de la vitesse relative, si un critère d'avertissement prédéfini est satisfait et, dans ce cas, pour émettre un signal d'avertissement par l'intermédiaire dudit au moins un moyen d'avertissement (6),
**caractérisé en ce que** le dispositif (8) comporte un moyen de mesure d'accélération pour définir une accélération transversale, et la commande électrique est conçue pour déterminer, à partir de la grandeur et de la direction définies de la vitesse relative et de l'accélération transversale définie, un rayon de virage qui est également utilisé pour vérifier si le critère d'avertissement est satisfait.

2. Dispositif (8) selon la revendication 1,
**caractérisé en ce que** la commande électrique est conçue pour définir une variation de la grandeur et de la direction de la vitesse relative, qui est également utilisée pour vérifier si le critère d'avertissement est satisfait.

3. Dispositif (8) selon l'une des revendications précédentes,
**caractérisé en ce que** pour vérifier si le critère d'avertissement est satisfait, la commande électrique est conçue pour utiliser une décélération maximale supposée de l'objet et/ou des conditions routières déterminées et/ou supposées et/ou une qualité déterminée et/ou supposée des mesures et/ou une classe d'objet définie.

4. Dispositif (8) selon l'une des revendications précédentes,
**caractérisé en ce que** la commande électrique est conçue pour calculer une probabilité de collision à partir de toutes les grandeurs à utiliser pour la vérification, et pour émettre le signal d'avertissement si la probabilité de collision dépasse une valeur limite prédéfinie.

5. Dispositif (8) selon la revendication 4,
**caractérisé en ce que** le dispositif (8) comprend un moyen de mesure de position pour définir une position de l'objet par rapport au dispositif (8), et la valeur limite prédéfinie dépend de la position.

6. Dispositif (8) selon la revendication 5,
**caractérisé en ce que** la position définie est associée à l'une parmi plusieurs zones (12), et la valeur limite prédéfinie dépend de ladite zone (12), en particulier est constante pour les positions d'une zone (12).

7. Dispositif (8) selon l'une des revendications précédentes,
**caractérisé en ce que** ledit au moins un moyen d'avertissement (6) est réalisé pour émettre un signal d'avertissement acoustique et/ou optique.

8. Dispositif (8) selon la revendication 7,
**caractérisé en ce que** le type de signal d'avertissement dépend de la vitesse relative définie et/ou de la position définie, en particulier de ladite zone (12).

9. Dispositif (8) selon l'une des revendications précédentes,
**caractérisé en ce que** le dispositif (8) comprend plusieurs moyens d'avertissement (6).

10. Dispositif (8) selon la revendication 9,
**caractérisé en ce que** les moyens d'avertissement (6) peuvent être fixés au véhicule automobile (2) à distance les uns des autres.

11. Dispositif (8) selon l'une des revendications précédentes,
**caractérisé en ce que** le dispositif (8) doit être raccordé seulement à une alimentation électrique du véhicule automobile (2).
